# EUROPÄISCHE PATENTANMELDUNG

(11) **EP 2 894 303 A1**
(43) Veröffentlichungstag der Anmeldung: **15.07.2015**
(21) Anmeldenummer: 14150754.1
(22) Anmeldetag: 10.01.2014
(51) Int. Cl.: F01K 3/18, F26B 7/00

(54) **Verfahren zum Zwischenspeichern von elektrischer Überschussenergie**

(71) Anmelder: Siemens Aktiengesellschaft, 80333 München (DE)
(72) Erfinder: Walkenhorst, Jan, 45478 Mülheim an der Ruhr (DE); de Lazzer, Armin, 45479 Mülheim an der Ruhr (DE)

(57) **Zusammenfassung**

Die Erfindung betrifft ein Verfahren zum Zwischenspeichern von elektrischer Überschussenergie, wobei die elektrische Überschussenergie in Wärmeenergie umgewandelt wird, und wobei die Wärmeenergie zum Trocknen von feuchter Braunkohle eingesetzt wird.

## Beschreibung

Die Erfindung betrifft ein Verfahren zum Zwischenspeichern von elektrischer Überschussenergie.

Des Weiteren betrifft die Erfindung ein Verfahren zum Betreiben eines Braunkohlekraftwerks.

Ferner betrifft die Erfindung eine Verwendung von elektrischer Überschussenergie.

Der verstärkte Einsatz von elektrischer Überschussenergie, insbesondere regenerativ erzeugter elektrischer Überschussenergie, führt zu einem steigenden Bedarf an Speicherkapazitäten für elektrische Überschussenergie.

Bestehende Zwischenspeicherkapazitäten, beispielsweise in Form von Pumpspeicherkraftwerken, sind zumindest in Deutschland weitestgehend ausgeschöpft. Zudem sind Neugenehmigungen für den Bau solcher Zwischenspeicherkapazitäten aus verschiedenen Gründen meist schwer zu erlangen. Geographisch günstige Gegebenheiten zum Bau solcher Zwischenspeicherkapazitäten finden sich beispielsweise in Gebirgen, wie etwa den Alpen. Jedoch lassen sich auch dort insbesondere aus Naturschutzgründen nicht beliebig große Zwischenspeicherkapazitäten realisieren, wenn geplante Zwischenspeicherkapazitäten überhaupt genehmigungsfähig sind.

Zwischenspeicherkapazitäten in Form von Druckluftspeicherkraftwerken zum Zwischenspeichern von elektrischer Überschussenergie haben sich bislang nicht durchgesetzt.

Es ist ein Power-to-Gas-Ansatz zur Zwischenspeicherung von elektrischer Überschussenergie bekannt, bei dem elektrischer Strom, beispielsweise durch Elektrolyse oder durch Hydratisieren von Kohlenstoff, zur Erzeugung von brennbarem Synthesegas eingesetzt wird, welches nach seiner Zwischenspeicherung in einem Gasturbinenkraftwerk wieder in elektrischen Strom umgesetzt werden könnte. Solche Ansätze weisen in der Regel einen sehr schlechten Wirkungsgrad bezogen auf die eingesetzte elektrische Energie auf. Beispielsweise erfolgt die Umsetzung des elektrischen Überschussstroms in Synthesegas mit einem Wirkungsgrad von etwa 40%. Die Umsetzung des Synthesegases in elektrischen Strom in einem modernen Gas- und Dampfkraftwerk erfolgt in der Regel mit einem Wirkungsgrad von etwa 55%. Hieraus ergibt sich für die Umsetzung von elektrischem Überschussstrom über Synthesegas zu elektrischem Strom ein Gesamtwirkungsgrad von etwa 0,4x0,55 bzw. 22%. Zudem befindet sich die Power-to-Gas-Technik noch im Versuchsstadium. Mit großtechnischen Anlagen bestehen noch keine Erfahrungen. Grundsätzlich ist bei dieser Technik noch zu klären, wie und wo das Synthesegas gespeichert werden kann. Auch ist die Verträglichkeit des Synthesegases mit üblichen Erdgasqualitäten nicht geklärt. In diesem Zusammenhang sei auf die aufwändige Aufbereitung von Biogas hingewiesen, welche zur Einleitung von Biogas in ein Erdgas-Versorgungsnetz erforderlich ist und weswegen Biogasanlagen in der Regel nur das jeweilig an sie angeschlossene, speziell auf Biogas ausgelegte Blockheizkraftwerk mit Biogas versorgen. Ferner müssen die hieraus resultierenden Fragen nach einem Konzept der Weiterverwendung in speziell für das erzeugte Synthesegas konzipierten Anlagen und nach einem Wechselbetrieb der Verbraucher zwischen Synthesegas und Erdgas noch geklärt werden.

Aufgabe der Erfindung ist es, eine neue Möglichkeit der Zwischenspeicherung von elektrischer Überschussenergie zu schaffen, welche im Vergleich zu herkömmlichen Methoden einen höheren Wirkungsgrad aufweist und mit herkömmlichen technischen Mitteln realisierbar ist.

Nach dem erfindungsgemäßen Verfahren zum Zwischenspeichern von elektrischer Überschussenergie wird die elektrische Überschussenergie in Wärmeenergie umgewandelt und die Wärmeenergie zum Trocknen von feuchter Braunkohle eingesetzt.

Geförderte Braunkohle ist feucht und weist in der Regel einen hohen Wassergehalt von etwa 30 Gewichtsprozent auf. Beim herkömmlichen Verbrennen derartig feuchter Braunkohle muss zunächst der Wasseranteil der feuchten Braunkohle verdampft werden. Hierdurch wird ein signifikanter Anteil einer zum Verbrennen der feuchten Braunkohle aufgebrachten Energie dazu verwendet, das in der Braunkohle enthaltene Wasser zu verdampfen. Dieser Energieanteil kann daher einem weiteren Wärmeumsatz im Braunkohlekraftwerk nicht zur Verfügung stehen. Zwar wird herkömmlich am Ende eines Kraftwerksprozesses bei einer Rauchgaswäsche ein Teil des verdampften Wassers wieder kondensiert; die Kondensationswärme wird jedoch üblicherweise auf einem technisch nicht nutzbaren Energieniveau frei. Aus diesem Grund resultiert der im Vergleich zu Steinkohlekraftwerken niedrige Wirkungsgrad von Braunkohlekraftwerken, insbesondere da Steinkohle lediglich einen Wasseranteil von etwa 5% aufweist.

Um den Wirkungsgrad von Braunkohlekraftwerken zu steigern, wird bereits in Pilotanlagen feuchte Braunkohle getrocknet. Üblicherweise wird zu diesem Zweck Dampf aus dem Kreislauf abgezweigt, wodurch dieser Trocknungsprozess nur bei in Betrieb befindlichem Kraftwerk aufrechterhalten werden kann.

Gemäß der Erfindung kann eine Trocknung von feuchter Braunkohle dem üblichen Kraftwerksprozess vorgeschaltet werden. Zudem lassen sich gemäß der Erfindung große Mengen an, beispielsweise regenerativ erzeugter, elektrischer Überschussenergie in Form von getrockneter Braunkohle zwischenspeichern. Hierbei ist von Vorteil, dass Braunkohlekraftwerke eine Netzanbindung an Energienetze aufweisen, über die derart große Mengen an elektrischer Überschussenergie abgenommen werden können. Selbst unter Berücksichtigung eines im Vergleich zu einem herkömmlichen Gas-und-Dampf-Kraftwerk geringen Wirkungsgrads eines der erfindungsgemäßen Trocknung von feuchter Braunkohle nachgeschalteten Braunkohlekraftwerksprozesses werden hohe Wirkungsgrade bezüglich der umgesetzten elektrischen Energie erreicht. Zur Durchführung der erfindungsgemäßen Trocknung von feuchter Braunkohle können herkömmliche technische Mittel eingesetzt werden, welche auch im großtechnischen Maßstab eingesetzt werden. Die weitere Umsetzung des Speichermediums "getrocknete Braunkohle" in elektrische Energie via Braunkohlekraftwerk ist eine etablierte und bewährte Technik.

Bevorzugt wird Wärmeenergie aus der getrockneten Braunkohle zurückgewonnen. Die zurückgewonnene Wärmeenergie kann, beispielsweise in eine andere Energieform umgewandelt, einer weiteren Verwendung zugeführt werden. Hierdurch kann der Wirkungsgrad der erfindungsgemäßen Zwischenspeicherung von elektrischer Überschussenergie weiter erhöht werden.

Die feuchte Braunkohle wird bevorzugt in Anwesenheit eines Trocknungsmediums getrocknet, welches unter Verwendung eines zumindest einem Anteil der aus der getrockneten Braunkohle zurückgewonnenen Wärmeenergie entsprechenden Energiebetrags umgewälzt wird. Zurückgewonnene Wärmeenergie kann hierbei durch Umwandlung in eine andere Energieform zur Optimierung des Trocknungsprozesses eingesetzt werden. Auch hierdurch kann der Wirkungsgrad der erfindungsgemäßen Zwischenspeicherung von elektrischer Überschussenergie weiter erhöht werden.

Bevorzugt wird die feuchte Braunkohle während ihrer Trocknung unter Verwendung eines zumindest einem Anteil der aus der getrockneten Braunkohle zurückgewonnenen Wärmeenergie entsprechenden Energiebetrags umgewälzt. Zurückgewonnene Wärmeenergie kann hierbei durch Umwandlung in eine andere Energieform zur Optimierung des Trocknungsprozesses eingesetzt werden, da sich eine Umwälzung der zu trocknenden Braunkohle während eines Trocknungsprozesses vorteilhaft auf den Trocknungsprozess auswirkt und eine gleichmäßigere Trocknung der zu trocknenden feuchten Braunkohle ermöglicht. Auch hierdurch kann der Wirkungsgrad der erfindungsgemäßen Zwischenspeicherung von elektrischer Überschussenergie weiter erhöht werden.

Nach dem erfindungsgemäßen Verfahren zum Betreiben eines Braunkohlekraftwerks wird feuchte Braunkohle vor ihrer Verbrennung unter Verwendung von elektrischer Überschussenergie getrocknet. Hiermit sind die oben genannten Vorteile entsprechend verbunden. Die elektrische Überschussenergie kann beispielsweise regenerativ erzeugt sein.

Gegenstand der Erfindung ist ferner eine Verwendung von elektrischer Überschussenergie zum Trocknen von feuchter Braunkohle. Auch mit dieser Verwendung sind die oben mit Bezug auf die Verfahren genannten Vorteile entsprechend verbunden. Als elektrische Überschussenergie kann regenerativ erzeugte elektrische Überschussenergie verwendet werden.

Im Folgenden wird eine beispielhafte Anwendung des erfindungsgemäßen Verfahrens zum Zwischenspeichern von elektrischer Überschussenergie dargestellt.

Setzt man beispielsweise an, dass zur Erwärmung des in der feuchten Braunkohle befindlichen Wassers auf Siedetemperatur (bei atmosphärischen Bedingungen) 4kJ/kg Wasser erforderlich sind, die Verdampfungsenthalpie bei 2000kJ/kg Wasser liegt, ein durch eine geeignete Maßnahme der in einer Aufheizzeitspanne eingebrachten Wärmeenergie entsprechender Energiebetrag im Kreislauf wiederverwendet wird und der entsprechende Energiebetrag zur Umwälzung des Trocknungsmediums und/oder der zu trocknenden feuchten Braunkohle eingesetzt wird, gewinnt man durch die Trocknung der Braunkohle eine der Verdampfungsenthalpie entsprechende Speicherleistung; zum Aufwand in Form einer Summe aus der Verdampfungsenthalpie und der Aufheizwärmeenergie. Der Wirkungsgrad beträgt hierbei etwa 2000kJ/2400kJ oder etwa 83%. Beim anschließenden Verbrennen der Braunkohle in einem modernen Braunkohlekraftwerk wird ein Wirkungsgrad von etwa 43% erreicht. Der Gesamtwirkungsgrad der erfindungsgemäßen Zwischenspeicherung von elektrischer Überschussenergie in Form von getrockneter Braunkohle und der Erzeugung von elektrischer Energie durch Verbrennung der getrockneten Braunkohle beträgt somit 0,83x0,43 bzw. etwa 35% und ist somit über 50% größer als der Gesamtwirkungsgrad einer Power-to-Gas-Anlage in Höhe von 22%.

Zur Trocknung von 1kg Wasser ist, wie oben dargestellt, eine Energie in Höhe von 2400kJ erforderlich. Mit einer Trocknungsleistung von 2,4MW können somit pro Stunde 3600kg Wasser einer feuchten Braunkohle entzogen bzw. 12t feuchte Braunkohle getrocknet werden. Hierbei werden 2,4MWh an elektrischer Überschussenergie eingesetzt.

Geht man von einem Braunkohlesilo für feuchte Braunkohle mit einem Fassungsvermögen in Höhe von 12000t aus, was einem Braunkohlekraftwerksbedarf von wenigen Stunden entspricht, so enthält ein solches Braunkohlesilo bei 30% Wasseranteil in der feuchten Braunkohle 3600t Wasser. Die erforderliche Trocknungsenergie zum Trocknen der in dem Braunkohlesilo enthaltenen feuchten Braunkohle liegt somit bei 2,4GWh. Selbst wenn die Trocknung der in dem Braunkohlesilo enthaltenen feuchten Braunkohle über acht Stunden gestreckt werden würde, könnte über diesen Zeitraum pro Stunde eine elektrische Überschussleistung in Höhe von 300MW abgenommen werden. Berücksichtigt man darüber hinaus, dass jedes Braunkohlekraftwerk über eigene große Zwischenlagerstätten bzw. Silos verfügen muss, ließe sich bei einer großtechnischen Umsetzung der Erfindung an nur wenigen Braunkohlekraftwerkstandorten, beispielsweise zehn großen Braunkohlekraftwerksstandorten, die ohnehin bereits über eine höchstleitungsfähige Netzanbindung an Energienetze verfügen, eine Speicherkapazität in Höhe von 24GWh aufbauen oder über acht Stunden pro Stunde 3GW elektrischer Überschussleistung in Trockenbraunkohle umsetzen. Setzt man beispielsweise die Dauer eines mittägigen sogenannten "Solarpeaks" von etwa vier Stunden an, könnten in diesem Zeitraum bis zu 6GW regenerativ erzeugter elektrischer Überschussleistung abgenommen werden.

Obwohl die Erfindung im Detail durch das vorstehende Ausführungsbeispiel näher illustriert und beschrieben wurde, so ist die Erfindung nicht durch das offenbarten Beispiel eingeschränkt und andere Variationen können vom Fachmann hieraus abgeleitet werden, ohne den Schutzumfang der Erfindung zu verlassen.

## Patentansprüche

1. Verfahren zum Zwischenspeichern von elektrischer Überschussenergie,
wobei die elektrische Überschussenergie in Wärmeenergie umgewandelt wird, und
wobei die Wärmeenergie zum Trocknen von feuchter Braunkohle eingesetzt wird.

2. Verfahren gemäß Anspruch 1,
wobei Wärmeenergie aus der getrockneten Braunkohle zurückgewonnen wird.

3. Verfahren gemäß Anspruch 2,
wobei die feuchte Braunkohle in Anwesenheit eines Trocknungsmediums getrocknet wird, welches unter Verwendung eines zumindest einem Anteil der aus der getrockneten Braunkohle zurückgewonnenen Wärmeenergie entsprechenden Energiebetrags umgewälzt wird.

4. Verfahren gemäß Anspruch 2 oder 3,
wobei die feuchte Braunkohle während ihrer Trocknung unter Verwendung eines zumindest einem Anteil der aus der getrockneten Braunkohle zurückgewonnenen Wärmeenergie entsprechenden Energiebetrags umgewälzt wird.

5. Verfahren zum Betreiben eines Braunkohlekraftwerks,
wobei feuchte Braunkohle vor ihrer Verbrennung unter Verwendung von elektrischer Überschussenergie getrocknet wird.

6. Verwendung von elektrischer Überschussenergie zum Trocknen von feuchter Braunkohle.
